# EUROPEAN PATENT SPECIFICATION

(11) **EP 4 380 913 B1**
(45) Date of publication and mention of the grant of the patent: **06.05.2026**
(21) Application number: 22852486.4
(22) Date of filing: 01.08.2022
(51) Int. Cl.: C06B 23/00, C06B 43/00, C01B 32/198, C06D 5/06, C06D 5/10, C10L 1/12, C10L 1/14, C10L 1/185

(54) **ENERGETIC FORMULATIONS CONTAINING EPOXY-MODIFIED GRAPHENE OXIDE**
ENERGETISCHE FORMULIERUNGEN MIT EPOXIDMODIFIZIERTEM GRAPHENOXID
FORMULATIONS ÉNERGÉTIQUES CONTENANT DE L'OXYDE DE GRAPHÈNE MODIFIÉ PAR ÉPOXY

(30) Priority: 02.08.2021 IL 28532521
(43) Date of publication of application: 12.06.2024
(73) Proprietor: Powder Fuels Ltd., 6964104 Tel Aviv (IL)
(72) Inventor: WEINREB, Abraham, 6964104 Tel Aviv-Yafo (IL); KENIG, Shmuel, 3508107 Haifa (IL); NAVEH, Naum, 4351513 Ra'anana (IL); KIDRON, Menahem, 2826528 Kiryat Ata (IL); ASSCHER, Micha, 9070233 Mevaseret Zion (IL)
(74) Representative: Dehns
(86) International application number: PCT/IL2022/050827
(87) International publication number: WO 2023/012786

(56) References cited:
- JIANG HAO ET AL: "Enhancement of Thermal and Mechanical Properties of Bismaleimide Using a Graphene Oxide Modified by Epoxy Silane", MATERIALS, vol. 13, no. 17, 31 August 2020 (2020-08-31), pages 3836, XP093032124, DOI: 10.3390/ma13173836
- DATABASE WPI Week 201963, 2019 Derwent World Patents Index; AN 2019-572619, XP002812077
- PUNETHA VINAY DEEP ET AL: "Interaction of photothermal graphene networks with polymer chains and laser-driven photo-actuation behavior of shape memory polyurethane/epoxy/epoxy-functionalized graphene oxide nanocomposites", POLYMER, ELSEVIER, AMSTERDAM, NL, vol. 181, 9 September 2019 (2019-09-09), XP085901609, ISSN: 0032-3861, [retrieved on 20190909], DOI: 10.1016/J.POLYMER.2019.121791
- ZHANG WENWEN ET AL: "Nitrated graphene oxide and its catalytic activity in thermal decomposition of ammonium perchlorate", MATERIALS RESEARCH BULLETIN, ELSEVIER, KIDLINGTON, GB, vol. 50, 21 October 2013 (2013-10-21), pages 73 - 78, XP028829584, ISSN: 0025-5408, DOI: 10.1016/J.MATERRESBULL.2013.10.023
- QI-LONG YAN, MICHAEL GOZIN, FENG-QI ZHAO, ADVA COHEN, SI-PING PANG: "Highly energetic compositions based on functionalized carbon nanomaterials", NANOSCALE, ROYAL SOCIETY OF CHEMISTRY, UNITED KINGDOM, vol. 8, no. 9, 1 January 2016 (2016-01-01), United Kingdom , pages 4799 - 4851, XP055438011, ISSN: 2040-3364, DOI: 10.1039/C5NR07855E
- YAN QI-LONG; ZHAO FENG-QI; KUO KENNETH K.; ZHANG XIAO-HONG; ZEMAN SVATOPLUK; DELUCA LUIGI T.: "Catalytic effects of nano additives on decomposition and combustion of RDX-, HMX-, and AP-based energetic compositions", PROGRESS IN ENERGY AND COMBUSTION SCIENCE., ELSEVIER SCIENCE PUBLISHERS, AMSTERDAM., NL, vol. 57, 14 October 2016 (2016-10-14), NL , pages 75 - 136, XP029775980, ISSN: 0360-1285, DOI: 10.1016/j.pecs.2016.08.002
- ISERT S.; XIN L.; XIE J.; SON S.F.: "The effect of decorated graphene addition on the burning rate of ammonium perchlorate composite propellants", COMBUSTION AND FLAME, ELSEVIER SCIENCE PUBLISHING CO., INC., NEW YORK, NY.; US, AMSTERDAM, NL, vol. 183, 9 June 2017 (2017-06-09), AMSTERDAM, NL , pages 322 - 329, XP085126445, ISSN: 0010-2180, DOI: 10.1016/j.combustflame.2017.05.024
- CHENG JIAN; YAN JINGCHUN; WANG LEI; ZHANG RONGXIAN; LIU ZULIANG; WANG RUI; LI ZHENMING: "Functionalization graphene oxide with energetic groups as a new family of metal-free and energetic burning rate catalysts and desensitizers for ammonium perchlorate", JOURNAL OF THERMAL ANALYSIS AND CALORIMETRY, KLUWER, DORDRECHT,, NL, vol. 140, no. 5, 11 November 2019 (2019-11-11), NL , pages 2111 - 2122, XP037098844, ISSN: 1388-6150, DOI: 10.1007/s10973-019-08938-7
- JIANG HAO, JI YANYAN, GAN JIANTUO, WANG LEI: "Enhancement of Thermal and Mechanical Properties of Bismaleimide Using a Graphene Oxide Modified by Epoxy Silane", MATERIALS, vol. 13, no. 17, pages 3836, XP093032124, DOI: 10.3390/ma13173836

## Description

### Field of the Invention

The present disclosure, in some embodiments, concerns an energetic formulation containing graphene oxide that is functionalized with epoxy groups.

### Background of the Invention

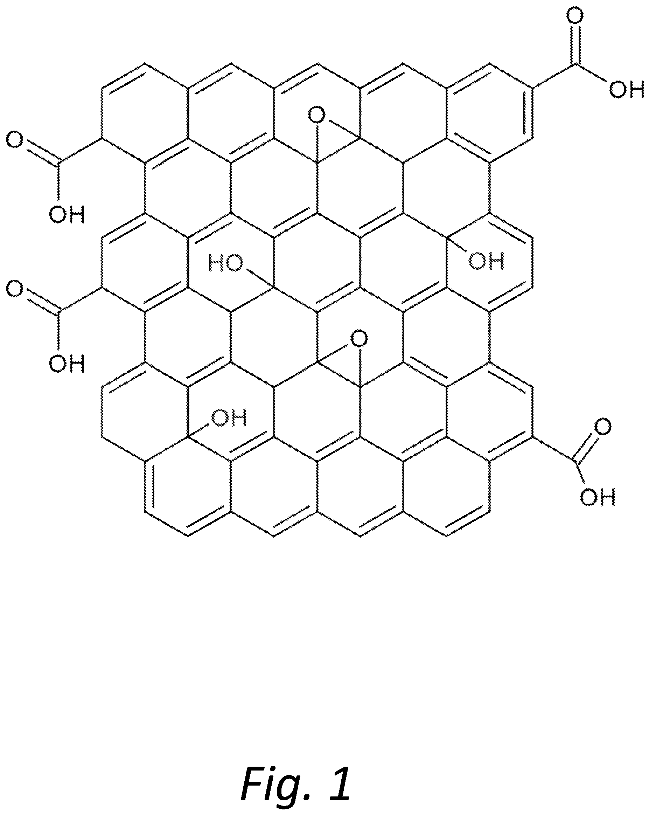

Graphene oxide is a single-layered material made of carbon, hydrogen, and oxygen molecules, produced through oxidation of graphite. The carbon sheets of graphene oxide are functionalized by oxygen-containing groups. Carboxyl groups are arranged on the edges of the sheets, and hydrophilic oxygen groups, such as hydroxyl, epoxy, and carbonyl groups, are arranged on the surface of the sheets. An exemplary molecular structure of graphene oxide is depicted in FIG. 1.

Various derivatives and complexes of graphene oxide have been explored as energetic materials. Energetic materials are a class of materials with a large amount of stored chemical energy, which can be rapidly released. Graphene oxide is considered to have unique energetic properties for at least the following reasons. First graphene oxide itself is a kind of energetic material with self-sustained combustion ability, because the oxygen groups on the graphene oxide sheet can decompose and generate a large amount of heat by absorbing a small amount of heat at a relatively low temperature (approximately 200°C), which can form a positive thermal feedback effect. Second, graphene oxide can promote mass transfer (mainly oxygen transfer) in an energetic composite system, resulting in rapid and thorough thermal reactions because the decomposition of the oxygen groups of graphene oxide is a process of oxygen release, whereas the thermal reaction of most energetic materials requires or includes oxygen transfer. In addition, reduced graphene oxide, produced by the decomposition of oxygen groups, possesses high thermal conductivity, leading to high combustion propagation by promoting heat transfer.

Much recent experimentation regarding energetic materials derived from graphene oxide has focused on formation of metallic or polymeric complexes between sheets of the GO. The most commonly used metal ions for coordination with functionalized graphene ligands include copper, nickel, and aluminum. However, metallic complexes are disfavored in many energetic applications. This is for two reasons. First, combustion of metals produces environmentally unfriendly emissions. Second, combustion of metals leaves a detectable signature.

Functionalized graphene oxide has previously been introduced into solid or liquid fuels, for the purpose of improving the combustion characteristics of those fuels. For example, it has been observed that the presence of GO functionalized with organic molecules having nitro- and amino-groups serves as a burning rate catalyst. Similarly, it has also been observed that the presence of GO functionalized with long-chain, nitrogen-containing alkyl groups improves the burning characteristics of liquid fuel, in parameters such as energy density, thrust, and flame speed.

In addition to serving as a precursor for energetic materials, graphene oxide has many other uses. GO has been used as a precursor for conductive films, surfactants, fluorescence and photoluminescence means, filtration apparatuses, and biosensors. Some such applications of GO have functionalized GO with an epoxy group, as an intermediate step. During preparation of the final product, the epoxy group is removed and replaced, or further reacted to form a covalent bond between the oxygen and a new functional group.

Zhang et al., Materials Research Bulletin 50 (2014) 73-78 discloses the synthesis of nitrated graphene oxide (NGO) by nitrifying GO with nitro-sulfuric acid and investigates the catalytic effect of the NGO for the thermal decomposition of ammonium perchlorate.

### Summary of the Invention

The present disclosure relates to a novel energetic material derived from graphene oxide. The novel energetic material does not rely on metallic complexes formed between graphene sheets, but instead is formed through functionalizing oxygen groups on each individual graphene sheet. Specifically, a molecule containing at least one epoxide group is functionalized onto graphene oxide. The epoxy-modified graphene oxide (EMGO) exhibits highly efficient energetic characteristics, as measured by exothermic enthalpy per unit mass, as well as high energy release rates, as measured by power (watts) per unit mass. The energetic material is easy to manufacture, requiring only a single condensation step, for a short time, at a relatively low temperature, and with non-toxic, non-explosive, solvents.

According to a first aspect, an energetic formulation includes graphene oxide functionalized with a molecule containing at least one epoxy group, wherein the functionalized graphene oxide is coated onto ammonium perchlorate.

In another implementation according to the first aspect, the graphene oxide is further functionalized through oxidation with a nitro-group, an amino-group, or an oxoacid at a different location than a location of functionalization with the epoxy group.

In another implementation according to the first aspect, the graphene oxide comprises at least one functional group containing nitrogen between a graphene sheet and the at least one epoxy group.

In another implementation according to the first aspect, the epoxide is sourced from an epoxy silane, and the graphene oxide comprises at least one functional group containing nitrogen between a graphene sheet and the at least one epoxy group.

In another implementation according to the first aspect, the epoxide is sourced from a hydrocarbon compound containing a plurality of epoxy groups.

In another implementation according to the first aspect, the functionalized graphene oxide is used as a stand-alone energetic material in powder form, mixed as powder in a liquid fuel, or mixed as a powder in a solid fuel.

Optionally, the functionalized graphene oxide is mixed in a liquid fuel or solid fuel that is metal-free.

According to a second aspect, a method of preparing an energetic formulation is disclosed. The method includes functionalizing graphene oxide with a molecule containing at least one epoxy group, and further comprises coating ammonium perchlorate with the functionalized graphene oxide.

In another implementation according to the second aspect, the method further includes further functionalizing the graphene oxide through oxidation with a nitro group, an amino group, or an oxoacid at a different location than a location of functionalization with the epoxy group.

In another implementation according to the second aspect, the functionalizing step comprises modifying an epoxy-containing molecule with at least one functional group containing nitrogen, and functionalizing a graphene sheet with the modified epoxy-containing molecule, such that the at least one functional group containing nitrogen is between the graphene sheet and the at least one epoxy group.

In another implementation according to the second aspect, the epoxide is sourced from an epoxy silane, and functionalizing step comprises functionalizing at least one functional group containing silicon between a graphene sheet and the at least one epoxy group.

In another implementation according to the second aspect, the epoxy group is sourced from a hydrocarbon compound containing a plurality of epoxy groups.

In another implementation according to the second aspect, the method further includes using the functionalized graphene oxide as a stand-alone energetic material in powder form, mixing the functionalized graphene oxide within a liquid fuel, or mixing the functionalized graphene oxide as a powder in a solid fuel.

Optionally, the method further includes mixing the functionalized graphene oxide in a liquid fuel or solid fuel that is metal-free.

In another implementation according to the second aspect, the functionalizing step is performed when the graphene oxide is suspended in water at a concentration of 0.5% to 10%.

In another implementation according to the second aspect, the functionalizing step further comprises condensing an epoxy-containing hydrocarbon compound with the graphene oxide using stannous chloride (SnCl₂) as a catalyst.

Optionally, the functionalizing step is performed within an acetone solvent at approximately room temperature.

Optionally, the epoxy group is sourced from a hydrocarbon compound containing two or more epoxy groups, and the functionalizing step comprises bonding a first oxygen from a hydroxyl group, attached to a sheet of graphene oxide, to a carbon of a first epoxy group of the hydrocarbon, and thereby converting the first oxygen into an ether and the first epoxy group into a hydroxyl group.

According to a third aspect, a method of coating ammonium perchlorate with functionalized graphene oxide is disclosed. The method includes: suspending the functionalized graphene oxide in acetone using an ultrasonic bath; dissolving the ammonium perchlorate in acetone in an ice bath; mixing and sonicating the graphene oxide suspension and ammonium perchlorate solution; adding the mixture to a precipitating liquid to thereby induce deposition of a powdery material comprised of ammonium perchlorate coated with the functionalized graphene oxide; and filtering and drying the powdery material.

Optionally, the precipitating liquid is ethyl acetate or diethyl ether.

Optionally, a ratio of ammonium perchlorate to functionalized graphene oxide is between 3:1 and 20:1.

### Brief Description of the Drawings

In the drawings:
FIG. 1 illustrates the chemical composition of graphene oxide;
FIG. 2 illustrates steps of a chemical reaction for functionalization of graphene oxide with epoxysilane, according to embodiments of the present disclosure;
FIG. 3 is a DSC thermogram comparing exothermic energy of graphene oxide, aminosilane, and epoxysilane, according to embodiments of the present disclosure;
FIG. 4 illustrates steps of a chemical reaction for functionalization of graphene oxide with 1,3 butadiene diepoxide, according to embodiments of the present disclosure;
FIG. 5 is a DSC thermogram comparing exothermic energy of graphene oxide functionalized with 1,3 butadiene diepoxide at different concentrations, according to embodiments of the present disclosure;
FIG. 6 illustrates steps of a chemical reaction for functionalization of graphene oxide with 1, 2, 7, 8 diepoxyoctane, according to embodiments of the present disclosure;
FIG. 7 is a DSC thermogram illustrating exothermic energy of graphene oxide functionalized with 1,2,7,8 diepoxyoctane, according to embodiments of the present disclosure; and
FIG. 8 illustrates steps of a chemical reaction for functionalization of graphene oxide with epichlorohydrin, according to embodiments of the present disclosure.

### Detailed Description of the Invention

The present disclosure, in some embodiments, concerns an energetic formulation containing graphene oxide that is functionalized with epoxy groups.

Before explaining at least one embodiment of the invention in detail, it is to be understood that the invention is not necessarily limited to the details set forth in the following description and illustrated in the Examples. The invention is capable of other embodiments or of being practiced or carried out in various ways.

The present disclosure relates to a novel energetic material derived from graphene oxide. The novel energetic material is formed through functionalizing oxygen groups on each individual graphene sheet. The introduction of organic moieties to the graphene oxide adds combustible materials to the GO. Specifically, a molecule containing at least one epoxide group is functionalized onto graphene oxide. The addition of the epoxy groups results both in increases in the energy derivable from the GO, as well as increases in the rate of release of this energy. In the energetic formulation according to the invention, the functionalized graphene oxide is coated onto ammonium perchlorate.

Below, various experimental methods are described for functionalizing GO with molecules containing one or more epoxy groups. One guiding principle common to the experimental strategy is that the epoxy groups that are directly bonded to the graphene oxide sheets are highly energetic. Thus, it would be counterproductive to replace or sacrifice these epoxy groups. Thus, addition of new functional groups is preferably performed through the hydroxyl or carboxyl groups of the GO. In each of the reactions described below, it is assumed that the functional groups are added at the hydroxyl groups of the GO.

Each of the reactions described below was performed on graphene oxide prepared according to any known method, such as Hummer's method. The oxygen functionality may be up to 50% by weight. The specific makeup of each graphene oxide sheet may be determined by x-ray photoelectron spectroscopy (XPS), although this is not required for preparation of the energetic material.

Advantageously, each of the reactions described below may be performed dispersing the graphene oxide preferably in water, while other non-toxic, non-explosive solvents are also useful. The functionalization reactions may be generally short, being performed in a single-step of approximately 30 minutes, and at relatively low temperatures. Thus, the methods of synthesis achieve high energy benefits using safe and "green" chemistry practices.

### Example 1- Epoxysilane

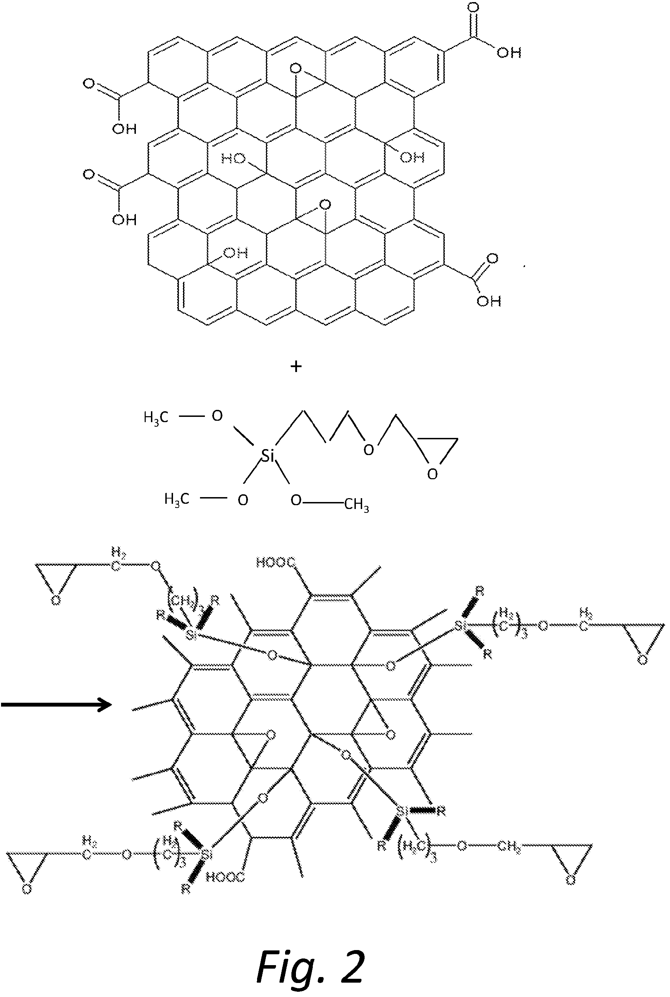

FIG. 2 depicts a reaction for functionalizing graphene oxide with an epoxysilane. In the illustrated example, the epoxysilane comprises a silane having three methoxy groups and a fourth group with the formula (CH₂)₃-O-CH₂-epoxy. In the illustrated depiction, the "R" groups bonded to the silicon in the product are methoxy groups. As may be recognized by those of skill in the art, any of the three methoxy groups may be replaced by another suitable "R" group, such as an ethoxy group.

Epoxysilane modified GO was prepared according to the following steps. In a first flask, 0.5 g GO were dispersed in 250 ml water. In a second flask, 2 ml of epoxysilane and 2 ml of water were dissolved in 200 ml isopropyl alcohol (IPA). Acetic acid was added to the second flask, until pH reached 3-4. IPA and the silane mixture (flask 2), were stirred at room temperature for 30 min and then added to the GO/water dispersion (flask 1). Afterward, the mixture was heated to 70°C for 30 min. Upon cooling to room-temperature the suspension was filtered, washed and dried.

For a basis of comparison, an aminosilane (i.e., a silane with three methoxy groups and whose fourth functional group is an alkyl chain ending in an amino group) was reacted with GO according to the same procedure. In addition, the epoxy silane was also reacted with GO at double the concentration of the first experiment, i.e., in the second flask, 4 ml of epoxy silane and 2 ml of water were dissolved in the IPA.

Table 1 summarizes the enthalpy and heat flow rate for the three experiments. Heat flow rate was measured by differential scanning calorimetry (DSC).

**Table 1. Composition, exothermic enthalpy and maximal heat flow rate by DSC**

| Composition | Enthalpy (J/g) | Max. Heat Flow (W/g) |
|---|---|---|
| Commercial GO | 1215 | 8.7 |
| GO / Aminosilane | 891 | 2.8 |
| GO / epoxysilane (low concentration) | 1323 | 11.3 |
| GO / epoxysilane (high concentration) | 726 | 3.2 |

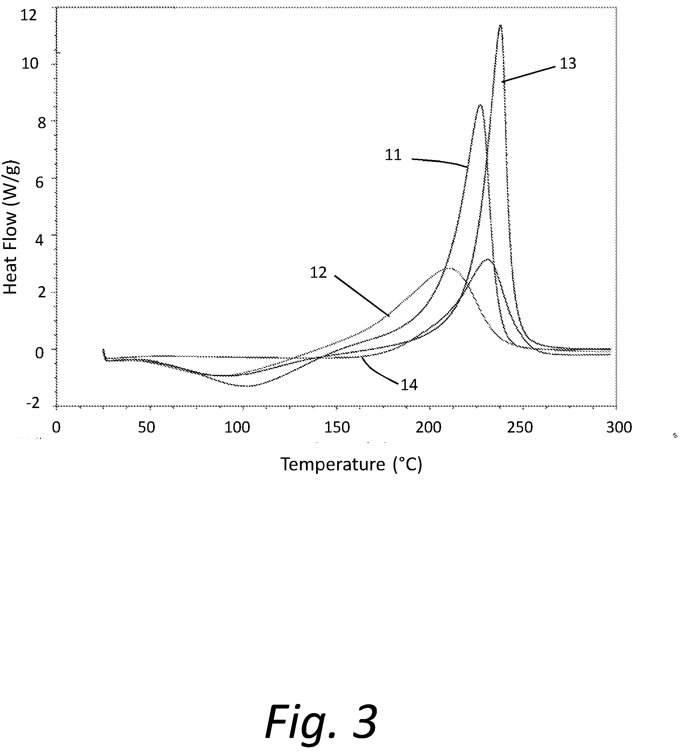

FIG. 3 illustrates the heat flow for each of the four measured compounds, measured as the temperature increased from room temperature to 300°C. Curve 11 is the peak for regular GO; curve 12 is the peak for GO / aminosilane, curve 13 is the peak for GO / epoxysilane (low concentration), and curve 14 is the peak for GO / epoxysilane (high concentration).

As can be seen from both Table 1 and FIG. 3, the lower concentration epoxysilane dramatically outperformed the aminosilane and the unmodified GO in the indicated measured metrics - exothermic enthalpy, and maximum heat flow.

It should be noted that, in addition to a large exothermic peak at approximately 230°C, each compound also exhibited a small endothermic peak at approximately 100°C. It is most probable that this endothermic peak corresponds to evaporation of water molecules that are adsorbed to the graphene oxide sheets.

### Example 2 - 1,3, Butadiene Epoxide

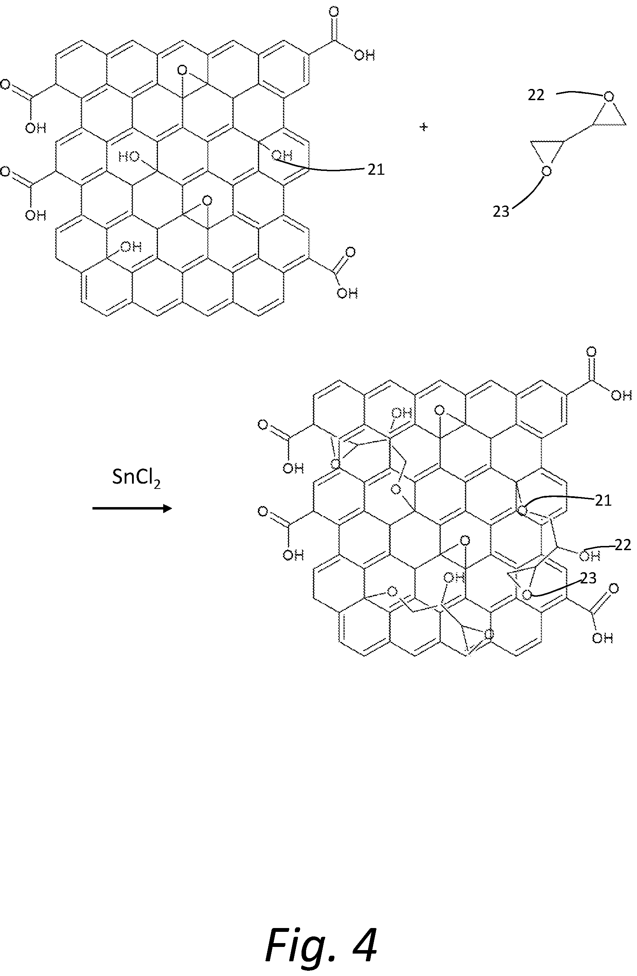

FIG. 4 illustrates a condensation reaction of graphene oxide with 1,3 butadiene epoxide, catalyzed by stannous chloride (SnCl₂). SnCl₂ is a well-known catalyst for catalyzing condensation reactions, although it is not known for catalyzing functionalization of GO. In the illustrated depiction, each of three hydroxyl groups on the graphene oxide is reacted with 1,3 butadiene epoxide. Oxygen 21 from the alcohol group of GO is bonded to one of the carbons from one of the epoxy groups of 1,3 butadiene epoxide, to form an ether. That epoxy group opens up, and its oxygen 22 bonds with the hydrogen that had been removed from the hydroxyl group of the GO, to form a new hydroxyl group. The other epoxide group, containing oxygen 23, remains unreacted.

An experimental procedure for conducting this condensation was performed as follows. In a first flask, 300 mg of GO were dispersed in 50 ml acetone. In a second flask, 32 mg of SnCl₂ were dissolved in 5 ml acetone. The content of the second flask was added to the first flask. 270 ml of 1,3 butadiene diepoxide were added to the first flask. The mixture was stirred at room temperature for 30 minutes. Following the reaction, the suspension was filtered, washed, and dried.

Table 2 summarizes the effect of the diepoxybutane and SnCl₂ concentrations on the endothermic enthalpies, exothermic enthalpies, and peak exothermic temperatures.

**Table 2. Composition of di-butadiene/catalyst ratio, endothermic peak temperature and enthalpy (peak1) and exothermic peak temperature and enthalpy (peak 2).**

| Sample | Composition | | | Peak 1 (°C) | Peak 1 Enthalpy (J/g) | Peak 2 (°C) | Peak 2 Enthalpy (J/g) |
|---|---|---|---|---|---|---|---|
| | Comm. GO (mg) | Di-epoxy (ml) | SnCl₂ (mg) | | | | |
| Comm. Go | -- | -- | -- | 87.87 | 357.2 | 229.33 | 1215 |
| GO - Diepoxy 1 | 300 | 270 | 32 | 83.70 | 327.6 | 240.87 | 1288 |
| GO - Diepoxy 2 | 300 | 270 | 64 | 83.75 | 303.7 | 240.43 | 1217 |
| GO - Diepoxy 3 | 300 | 540 | 64 | 91.40 | 327.7 | 238.23 | 1380 |

As can be seen, the highest exothermic enthalpy occurred in the GO - Diepoxy 3 test case, with 540 ml of diepoxybutane and 64 mg of stannous chloride.

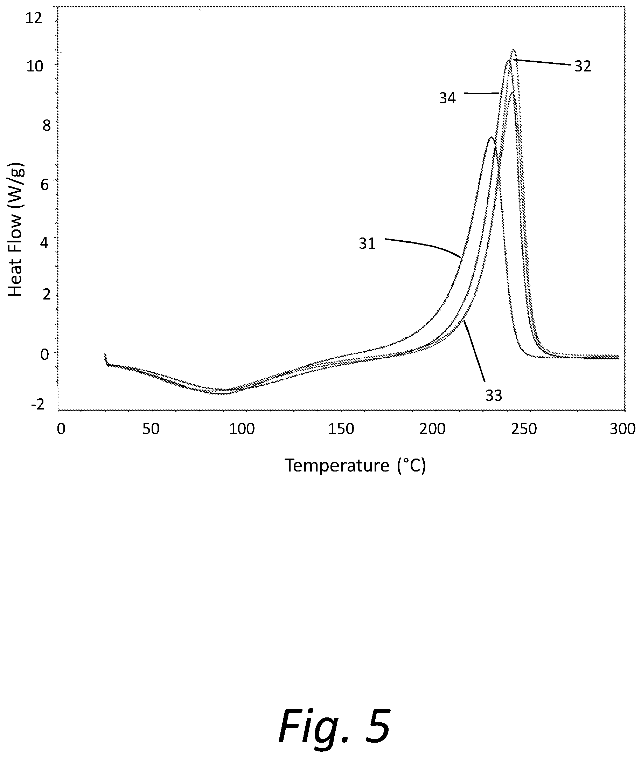

FIG. 5 is a DSC thermogram illustrating the heat flow for each of the four measured compounds, measured as the temperature increased from room temperature to 300°C. Curve 31 is the peak for regular GO; curve 32 is the peak for sample GO-epoxy 1, curve 33 is the peak for sample GO-epoxy 2, and curve 34 is the peak for sample GO-epoxy 3. As can be seen, all of the diepoxybutadiene treated GO compositions demonstrated higher exothermic enthalpies and heat flows compared to and heat flows compared to neat GO.

### Example 3 - 1,2,7,8 diepoxyoctane

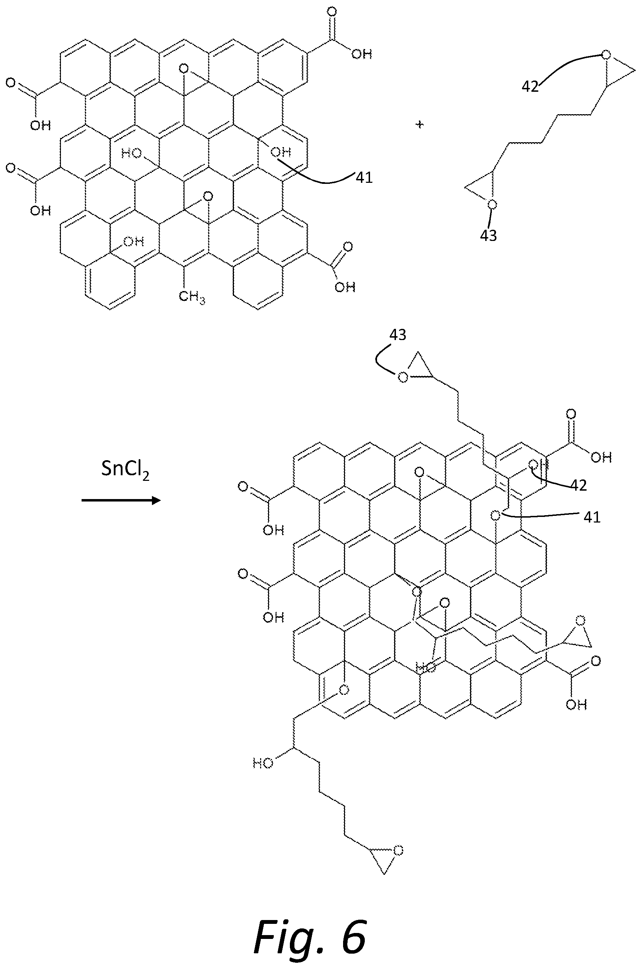

FIG. 6 illustrates a condensation reaction of graphene oxide with 1,2,7,8 diepoxyoctane, catalyzed by stannous chloride (SnCl₂). Similar to FIG. 4, in the illustrated depiction, each of three alcohol groups on the graphene oxide is reacted with 1,3 butadiene epoxide. Oxygen 41 from the alcohol group of GO is bonded to one of the carbons from one of the epoxy groups of 1,2,7,8 diepoxyoctane, to form an ether. That epoxy group opens up, and its oxygen 42 bonds with the hydrogen that had been removed from the hydroxyl group of the GO, to form a new hydroxyl group. The other epoxide group, containing oxygen 43, remains unreacted. The experimental procedure of this reaction was the same as that of sample GO-diepoxy 1 in Example 2.

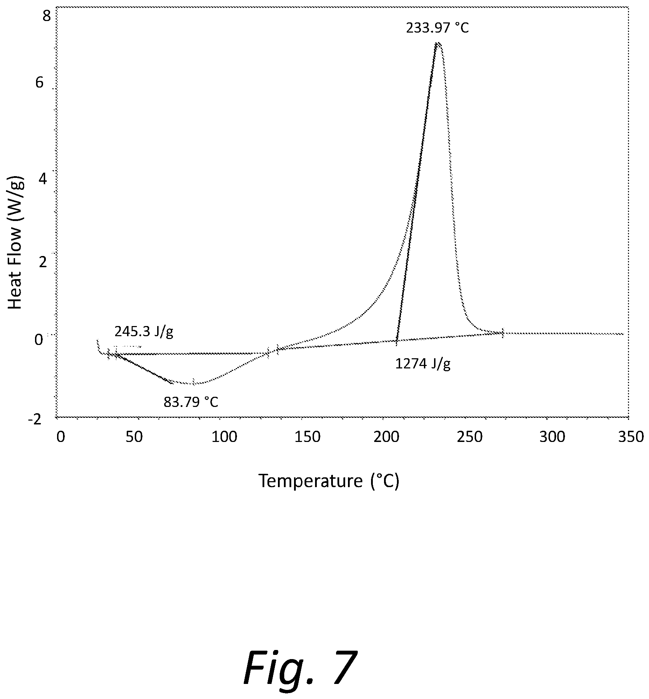

FIG. 7 is a DSC thermogram illustrating the heat flow for the GO modified with 1,2,7,8 diepoxyoctane, measured as the temperature increased from room temperature to 300°C. The endothermic peak was at 83.79°C and had an enthalpy of 245.3 J/g, while the exothermic peak was at 233.79°C and had an enthalpy of 1,274 J/g.

As can be seen from a comparison of FIG. 7 to FIG. 5, the heat flow rate, peak exothermic temperature, and exothermic enthalpy of the 1,2,7,8 diepoxyoctane are higher than those of neat GO, but slightly less than those of 1,3 diepoxybutadiene. The relevant values for 1,2,7,8 diepoxyoctane and 1,3 diepoxybutadiene are summarized below in Table 3.

**Table 3: Enthalpies of GO modified by di-epoxy butadiene treated GO and di-epoxy octane treated GO**

| Sample | Composition | | | Peak 1 (°C) | Peak 1 Enthalpy (J/g) | Peak 2 (°C) | Peak 2 Enthalpy (J/g) |
|---|---|---|---|---|---|---|---|
| | Comm. GO (mg) | Di-epoxy (ml) | SnCl₂ (mg) | | | | |
| Comm. GO | -- | -- | -- | 87.87 | 357.2 | 229.33 | 1215 |
| Diepoxy butadiene | 300 | 270 | 32 | 83.70 | 327.6 | 240.87 | 1288 |
| Diepoxy octane | 300 | 270 | 32 | 83.79 | 245.3 | 233.97 | 1274 |

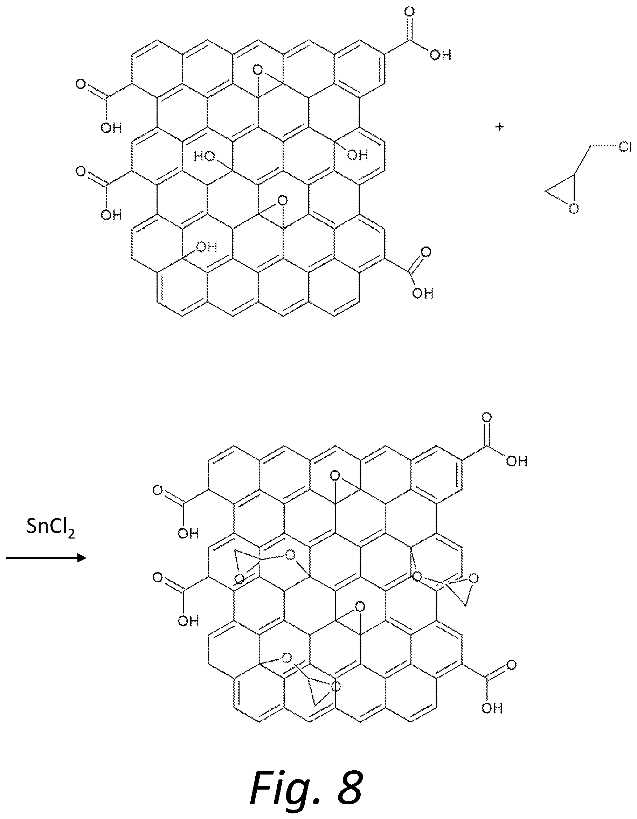

In addition the above-described examples, for which enthalpy measurements were taken, it is expected that other sources of epoxide should produce similar energetic effects. For example, FIG. 8 illustrates the functionalization of GO with epichlorohydrin, to produce an epoxy-modified GO without any alkyl groups between the ether and the epoxide. Other potential sources for the epoxide include polyglycol di-epoxides, epoxidized pentaerythritol, epoxy-amine compounds, and other di- and multi-epoxy compounds.

In addition, other experimental parameters are expected to produce equivalent, or even superior, energetic results. For example, the GO may be suspended in water with a weight percent ranging from 0.5% to 10%. Likewise, the concentration of the epoxy-containing compound and the catalyst may be increased up to a saturation point of the epoxy-containing compounds relative to the hydroxyl groups of the graphene oxide.

Furthermore, it may be possible to increase the energetic qualities of the graphene oxide sheets even further by further functionalizing other oxygen atoms of the graphene oxide with oxidizing agents such as nitric acids or sulfuric acids, or other oxoacids. Nitro-groups may be introduced in the form of the nitronium ion. Alternatively, nitro-groups or amino groups may be inserted through a two-step process of acylating the carboxyl groups of the graphene oxide, and substituting functional groups containing the nitro- or amino- groups for the chloride of the acyl groups. Similarly, any of the above-described epoxy-containing compounds may be modified with oxidizing agents containing nitrogen. In such embodiments, the nitrogen is located between the graphene sheet and the epoxy groups.
The epoxy-modified graphene oxide may be used as a stand-alone energetic material in powder from, mixed as a powder in a liquid fuel, or combined with a solid fuel. In certain embodiments, the epoxy-modified graphene oxide is pre combined with ammonium perchlorate (APC) and then included in a solid propellant. Ammonium perchlorate (NH₄ClO₄) is a water-soluble solid that is a powerful oxidizer, and the main ingredient of high-energy composite propellants. The graphene oxide may be coated onto or be adsorbed within the ammonium perchlorate.

Example 4 below illustrates one experimental technique for adsorbing or coating ammonium perchlorate with epoxy-modified graphene oxide. The below experiment was performed on graphene oxide without epoxy functionalization; however, when such experiment is repeated with EMGO (a higher energetic material) it is expected to increase even more the resulting effectiveness.

### Example 4

Powdery graphene oxide (GO) was suspended in acetone using an ultrasonic bath for 24 h. Ammonium perchlorate (AP) was dissolved in acetone in an ice bath. The GO suspension and AP solution were mixed and sonicated, then added to ethyl acetate to induce deposition of an AP/GO powdery material. Other non-solvents are possible, such as diethyl ether. The rate of addition of the AP/GO dispersion to the non-solvent also affects the enthalpy and decomposition temperature since it affects the final AP:GO ratio in the solid deposit. After decantation, the solids were filtrated with a Buchner funnel using either Teflon or cellulose filter. The material was allowed to dry at room temperature for 24 hours, then dried out in a vacuum oven for another 24 hours. Various ratios of AP to GO were prepared, from 20:1 to 3:1, each showing a different energetic content and behavior. For instance, an AP:GO ratio of 4:1 shows an enthalpy of 2674 J/g with the exotherm peak at 358°C. AP crystallites coated with GO were formed with typical dimensions in the order of 10 microns.

## Claims

1. An energetic formulation, comprising graphene oxide functionalized with a molecule containing at least one epoxy group, wherein the functionalized graphene oxide is coated onto ammonium perchlorate.

2. The energetic formulation of claim 1, wherein the graphene oxide is further functionalized through oxidation with a nitro-group, an amino-group, or an oxoacid at a different location than a location of functionalization with the epoxy group.

3. The energetic formulation of claim 1, wherein the graphene oxide comprises at least one functional group containing nitrogen between a graphene sheet and the at least one epoxy group.

4. The energetic formulation of claim 1, wherein the epoxide is sourced from an epoxy silane, and the graphene oxide comprises at least one functional group containing nitrogen between a graphene sheet and the at least one epoxy group.

5. The energetic formulation of claim 1, wherein the epoxide is sourced from a hydrocarbon compound containing a plurality of epoxy groups.

6. The energetic formulation of claim 1, wherein the functionalized graphene oxide is used as a stand-alone energetic material in powder form, mixed as powder in a liquid fuel, or mixed as a powder in a solid fuel.

7. The energetic formulation of claim 6, wherein the functionalized graphene oxide is mixed in a liquid fuel or solid fuel that is metal-free.

8. A method of preparing an energetic formulation, comprising functionalizing graphene oxide with a molecule containing at least one epoxy group, and further comprising coating ammonium perchlorate with the functionalized graphene oxide.

9. The method of claim 8, comprising further functionalizing the graphene oxide through oxidation of the graphene oxide with a nitro group, an amino group, or an oxoacid, at a different location than a location of functionalization with the epoxy group.

10. The method of claim 8, wherein the functionalizing step comprises modifying an epoxy-containing molecule with at least one functional group containing nitrogen, and functionalizing a graphene sheet with the modified epoxy-containing molecule, such that the at least one functional group containing nitrogen is between the graphene sheet and the at least one epoxy group.

11. The method of claim 8, wherein the epoxide is sourced from an epoxy silane, and functionalizing step comprises functionalizing at least one functional group containing silicon between a graphene sheet and the at least one epoxy group.

12. The method of claim 8, wherein the epoxy group is sourced from a hydrocarbon compound containing a plurality of epoxy groups.

13. The method of claim 8, further comprising using the functionalized graphene oxide as a stand-alone energetic material in powder form, mixing the functionalized graphene oxide within a liquid fuel, or mixing the functionalized graphene oxide as a powder in a solid fuel.

## Patentansprüche

1. Energetische Formulierung, umfassend Graphenoxid, das mit einem Molekül funktionalisiert ist, das mindestens eine Epoxygruppe enthält, wobei das funktionalisierte Graphenoxid auf Ammoniumperchlorat aufgebracht ist.

2. Energetische Formulierung nach Anspruch 1, wobei das Graphenoxid durch Oxidation mit einer Nitrogruppe, einer Aminogruppe oder einer Oxosäure an einer anderen Stelle als der Stelle der Funktionalisierung mit der Epoxygruppe weiter funktionalisiert ist.

3. Energetische Formulierung nach Anspruch 1, wobei das Graphenoxid mindestens eine stickstoffhaltige funktionelle Gruppe zwischen einer Graphenschicht und der mindestens einen Epoxygruppe umfasst.

4. Energetische Formulierung nach Anspruch 1, wobei das Epoxid aus einem Epoxysilan stammt und das Graphenoxid mindestens eine stickstoffhaltige funktionelle Gruppe zwischen einer Graphenschicht und der mindestens einen Epoxygruppe umfasst.

5. Energetische Formulierung nach Anspruch 1, wobei das Epoxid aus einer Kohlenwasserstoffverbindung stammt, die eine Vielzahl an Epoxygruppen enthält.

6. Energetische Formulierung nach Anspruch 1, wobei das funktionalisierte Graphenoxid als eigenständiges energetisches Material in Pulverform, als Pulver in einen flüssigen Brennstoff gemischt oder als Pulver in einen festen Brennstoff gemischt verwendet wird.

7. Energetische Formulierung nach Anspruch 6, wobei das funktionalisierte Graphenoxid in einen metallfreien flüssigen Brennstoff oder festen Brennstoff eingemischt wird.

8. Verfahren zur Herstellung einer energetischen Formulierung, umfassend das Funktionalisieren von Graphenoxid mit einem Molekül, das mindestens eine Epoxygruppe enthält, und weiter umfassend das Beschichten von Ammoniumperchlorat mit dem funktionalisierten Graphenoxid.

9. Verfahren nach Anspruch 8, umfassend das weitere Funktionalisieren des Graphenoxids durch Oxidation des Graphenoxids mit einer Nitrogruppe, einer Aminogruppe oder einer Oxosäure an einer anderen Stelle als der Stelle der Funktionalisierung mit der Epoxygruppe.

10. Verfahren nach Anspruch 8, wobei der Funktionalisierungsschritt das Modifizieren eines epoxyhaltigen Moleküls mit mindestens einer stickstoffhaltigen funktionellen Gruppe und das Funktionalisieren einer Graphenschicht mit dem modifizierten epoxyhaltigen Molekül umfasst, so dass sich die mindestens eine stickstoffhaltige funktionelle Gruppe zwischen der Graphenschicht und der mindestens einen Epoxygruppe befindet.

11. Verfahren nach Anspruch 8, wobei das Epoxid aus einem Epoxysilan stammt und der Funktionalisierungsschritt das Funktionalisieren mindestens einer siliziumhaltigen funktionellen Gruppe zwischen einer Graphenschicht und der mindestens einen Epoxygruppe umfasst.

12. Verfahren nach Anspruch 8, wobei die Epoxygruppe aus einer Kohlenwasserstoffverbindung stammt, die eine Vielzahl von Epoxygruppen enthält.

13. Verfahren nach Anspruch 8, weiter umfassend das Verwenden des funktionalisierten Graphenoxids als eigenständiges energetisches Material in Pulverform, das Einmischen des funktionalisierten Graphenoxids in einen flüssigen Brennstoff oder das Einmischen des funktionalisierten Graphenoxids als Pulver in einen festen Brennstoff.

## Revendications

1. Formulation énergétique, comprenant de l'oxyde de graphène fonctionnalisé avec une molécule contenant au moins un groupe époxy, dans laquelle l'oxyde de graphène fonctionnalisé est enrobé sur du perchlorate d'ammonium.

2. Formulation énergétique selon la revendication 1, dans laquelle l'oxyde de graphène est en outre fonctionnalisé par oxydation avec un groupe nitro, un groupe amino ou un oxoacide à un emplacement différent d'un emplacement de fonctionnalisation avec le groupe époxy.

3. Formulation énergétique selon la revendication 1, dans laquelle l'oxyde de graphène comprend au moins un groupe fonctionnel contenant de l'azote entre une feuille de graphène et l'au moins un groupe époxy.

4. Formulation énergétique selon la revendication 1, dans laquelle l'époxyde est issu d'un époxy silane, et l'oxyde de graphène comprend au moins un groupe fonctionnel contenant de l'azote entre une feuille de graphène et l'au moins un groupe époxy.

5. Formulation énergétique selon la revendication 1, dans laquelle l'époxyde est issu d'un composé hydrocarboné contenant une pluralité de groupes époxydes.

6. Formulation énergétique selon la revendication 1, dans laquelle l'oxyde de graphène fonctionnalisé est utilisé comme matériau énergétique autonome sous forme de poudre, mélangé en poudre dans un combustible liquide, ou mélangé en poudre dans un combustible solide.

7. Formulation énergétique selon la revendication 6, dans laquelle l'oxyde de graphène fonctionnalisé est mélangé dans un combustible liquide ou un combustible solide qui est exempt de métal.

8. Procédé de préparation d'une formulation énergétique, comprenant la fonctionnalisation d'oxyde de graphène avec une molécule contenant au moins un groupe époxy, et comprenant en outre un revêtement de perchlorate d'ammonium avec l'oxyde de graphène fonctionnalisé.

9. Procédé selon la revendication 8, comprenant une fonctionnalisation supplémentaire de l'oxyde de graphène par oxydation de l'oxyde de graphène avec un groupe nitro, un groupe amino ou un oxoacide, à un emplacement différent d'un emplacement de fonctionnalisation avec le groupe époxy.

10. Procédé selon la revendication 8, dans lequel l'étape de fonctionnalisation comprend une modification d'une molécule contenant de l'époxy avec au moins un groupe fonctionnel contenant de l'azote, et une fonctionnalisation d'une feuille de graphène avec la molécule contenant de l'époxy modifiée, de sorte que l'au moins un groupe fonctionnel contenant de l'azote est entre la feuille de graphène et l'au moins un groupe époxy.

11. Procédé selon la revendication 8, dans lequel l'époxyde est issu d'un silane époxy, et l'étape de fonctionnalisation comprend une fonctionnalisation d'au moins un groupe fonctionnel contenant du silicium entre une feuille de graphène et l'au moins un groupe époxy.

12. Procédé selon la revendication 8, dans lequel le groupe époxy est issu d'un composé hydrocarboné contenant une pluralité de groupes époxy.

13. Procédé selon la revendication 8, comprenant en outre l'utilisation de l'oxyde de graphène fonctionnalisé en tant que matériau énergétique autonome sous forme de poudre, le mélange de l'oxyde de graphène fonctionnalisé dans un combustible liquide, ou le mélange de l'oxyde de graphène fonctionnalisé en tant que poudre dans un combustible solide.
